# EUROPEAN PATENT SPECIFICATION

(11) **EP 2 144 515 B1**
(45) Date of publication and mention of the grant of the patent: **11.04.2012**
(21) Application number: 08745674.5
(22) Date of filing: 11.04.2008
(51) Int. Cl.: A23L 1/03, A23L 1/236, A23L 2/60

(54) **SWEETENER COMPOSITION HAVING IMPROVED TASTE**
SÜSSSTOFFZUSAMMENSETZUNG MIT VERBESSERTEM GESCHMACK
COMPOSITION D'ÉDULCORANT AYANT UN GOÛT AMÉLIORÉ

(30) Priority: 13.04.2007 US 911655 P; 31.05.2007 US 756528
(43) Date of publication of application: 20.01.2010
(73) Proprietor: The Coca-Cola Company, Atlanta, GA 30313 (US); Yamakawa, Yukimi, Kanagawa 224-0041 (JP); Shimada, Haruko, Saitama 350-1316 (JP)
(72) Inventor: YAMAKAWA, Yukimi, Yokohama-city Kanagawa 224-0041 (JP); SHIMADA, Haruko, Sayama-city Saitama 350-1316 (JP)
(74) Representative: Jackson, Robert Patrick
(86) International application number: PCT/US2008/060114
(87) International publication number: WO 2008/128104

(56) References cited:
- WO-A-02/080704
- WO-A-2005/009147
- WO-A-2007/070224
- US-A1- 2002 187 233
- US-A1- 2003 008 047
- US-A1- 2005 064 070
- US-B1- 7 029 717
- GUO C ET AL: "Effervescent beverage, used to prevent heatstroke, comprises citric acid, sodium citrate, aspartame, potassium and calcium chlorides, magnesium, iron and zinc sulfates, vitamins B1, B2, B6, A, E, and C and nicotinic acid" WPI / THOMSON,, 1 January 1900 (1900-01-01), XP002426044

## Description

### FIELD OF THE INVENTION

This invention is related to sweetener compositions having improved taste, methods for their formulation, and uses.

### BACKGROUND OF THE INVENTION

Low calorie beverages and food products have become more important with increased health awareness and sedentary lifestyles. However, alternative non-caloric or low-caloric sweeteners that generally are used as sugar or sucrose substitutes (e.g., saccharin, aspartame, and sucralose) possess taste characteristics different than that of sugar such as sweet tastes with different temporal profiles, maximal responses, flavor profiles, mounthfeels, and/or adaptation behaviors than that of sugar. For example, the sweet tastes of synthetic high-potency sweeteners are slower in onset and longer in duration than the sweet taste produced by sugar and thus change the taste balance of a food composition. Because of these differences, use of a synthetic high-potency sweetener to replace a bulk sweetener, such as sugar, in a food or beverage, causes an unbalanced temporal profile and/or flavor profile. If the taste profile of synthetic high-potency sweeteners could be modified to impart specific desired taste characteristics to synthetic high-potency non-caloric or low-caloric sweeteners, low calorie beverages and food products comprising such synthetic high-potency sweeteners could be provided that have taste characteristics that are desirable to consumers. Accordingly, it would be desirable to selectively modify the taste characteristics of synthetic high-potency sweeteners.

US 2002/0187233 discloses compositions comprising a food starch-modified syrup for eliminating the aftertaste of various non-nutritive sweeteners.

US 7,029,717 discloses a stabilized sucralose-containing composition.

WO 02/080704 discloses a composition comprising an intense sweetener; a gum; a food additive comprising an amino acid, an acid selected from organic acids, inorganic acids and mixtures thereof; a metal ion; and an agent which masks or blocks the taste of bitter substances.

US 2003/008047 discloses compositions comprising neotame or aspartame and at least one divalent cation, trivalent cation or mixture thereof.

WO 2005/009147 discloses a ready-to-drink formulation comprising still spring water an active ingredient, one or more flavouring agents, one or more sweeteners and an organic acid.

US 2005/0064070 discloses compositions comprising fluids containing water, sugar including carbohydrates, electrolytes and citric acid.

Thus, there is a need to provide a non-caloric or low-caloric sweetener composition having improved taste and methods thereof. There is an additional need in the art to provide a non-caloric or low-caloric sweetener composition with a more sugar-like taste and methods thereof

### SUMMARY OF THE INVENTION

This invention provides a sweetener composition having improved taste wherein the sweetener composition comprises acesulfame K and sucralose, wherein the acesulfame-K and sucralose are present in the sweetener composition at a weight ratio from about 0.5 to about 3.0 parts acesulfame-K to about 1 part sucralose, and at least one magnesium salt selected from the group consisting of magnesium chloride, magnesium sulfate, and combinations thereof. In another particular embodiment, the sweetener composition further comprises at least one inorganic salt different than the at kast une magnesium salt, such as sodium chloride.

Also provided are sweetened compositions comprising the sweetener compositions described herein. In a particular embodiment, the sweetened composition comprises a beverage.

Objects and advantages of the invention will be set forth in part in the following description. Unless otherwise defined, all technical and scientific terms and abbreviations used herein have the same meaning as commonly understood by one of ordinary skill in the art to which this invention pertains.

### DETAILED DESCRIPTION OF THE INVENTION

Reference now will be made in detail to the presently proffered embodiments of the invention. Each example is provided by way of explanation of embodiments of the invention, not limitation of the invention.

This invention addresses the above-identified needs by providing a sweetener composition having improved taste characteristics. The sweetener composition comprises acesulfame K and sucralose, wherein the acesulfame-K and sucralose are present in the sweetener composition at a weight ratio from about 0.5 to about 3.0 parts acesulfame-K to about 1 part sucralose, and at least one magnesium salt selected from the group consisting of magnesium chloride, magnesium sulfate, and combinations thereof.

Other additional synthetic sweeteners also may be used in the sweetener composition, non-limiting examples of which include alitame, saccharin, neohesperidin dihydrochalcone, cyclamate, neotame, N- [3-(3- hydroxy-4-methoxyphenyl)propyl]-L-[α]-aspartyl]-L-phenylalanine 1-methyl ester, N- [3 -(3 -hydroxy-4-methoxypheny 1)-3-methylbutyl]-L-[α]-aspartyl]-L-phenylalanine 1-methyl ester, N- [3-(3-methoxy-4-hydroxyphenyl)propyl]-L-[α]-aspartyl]-L-phenylalanine 1-methyl ester, salts thereof, and the like.

It also is envisioned that natural high-potency sweeteners may be used in combination with the synthetic sweeteners described hereinabove. Non-limiting examples of suitable non-caloric and low-caloric natural high-potency sweeteners include rebaudioside A, rebaudioside B, rebaudioside C (dulcoside B), rebaudioside D, rebaudioside E, rebaudioside F, dulcoside A, rubusoside, stevia, stevioside, mogroside IV, mogroside V, Luo Han Guo sweetener, siamenoside, monatin and its salts (monatin SS, RR, RS, SR), curculin, glycyrrhizic acid and its salts, thaumatin, monellin, mabiulin, brazzein, hernandulcin, phyllodulcin, glycyphyllin, phloridzin, trilobatin, baiyunoside, osladin, polypodoside A, pterocaryoside A, pterocaryoside B, muhurozioside, phlomisoside I, periandrin I, abrusoside A, and cyclocarioside I.

In a particular embodiment, the at least one magnesium salt comprises magnesium chloride. In one embodiment, the magnesium chloride is present in the sweetener composition at a weight ratio from about 0.07 to about 15 parts magnesium chloride on a dry basis to about I part synthetic sweetener. In another embodiment, the magnesium chloride is present in the sweetener composition at a weight ratio from about 0.3 to about 9 parts magnesium chloride on a dry basis to about 1 part synthetic sweetener.

In another particular embodiment, the at least one magnesium salt comprises magnesium sulfate. In one embodiment, the magnesium sulfate is present in the sweetener composition at a weight ratio from about 0.07 to about 19 parts magnesium sulfate on a dry basis to about 1 part synthetic sweetener. In another embodiment, the magnesium sulfate is present in the sweetener composition at a weight ratio from about 0.4 to about 11 parts magnesium sulfate on a dry basis to about I part synthetic sweetener.

In other particular embodiments, the sweetener compositions provided herein may further comprise at least one inorganic salt different than the at least one magnesium salt. Non-limiting examples of suitable inorganic salts include sodium chloride, potassium chloride, sodium sulfate, potassium sulfate, sodium phosphate, and potassium phosphate. In one embodiment, the at least one inorganic salt comprises sodium chloride, and the sodium chloride is present in the sweetener composition at a weight ratio from about 0.07 to about 14 parts sodium chloride on a dry basis to about 1 part synthetic sweetener.

Suitable uses for the sweetener compositions provided herein are well known to those of ordinary skill in the art. For example, the sweetener compositions may be used in place of conventional sweeteners in sweetened compositions, such as food, beverage, pharmaceutical, tobacco, nutraceutical, oral hygienic/cosmetic products, and the like. Sweetened compositions, as used herein, generally comprise a sweetener composition and a sweetenable composition.

The sweetener composition comprising the at least one synthetic sweetener may be present in the sweetened composition in an amount sufficient to impart a desired level of sweetness in the sweetened composition. In a particular embodiment, the at least one synthetic sweetener is present in the sweetened composition in an amount in the range of about 0.008 to about 0.075 weight percent of the sweetened composition. In one embodiment, the at least one magnesium salt is present in the sweetened composition in an amount from about 0.4 to about 12 mmol/kg. In another embodiment, the at least one magnesium salt is present in the sweetened composition in an amount from about 2.5 to about 7.5 mmol/kg. The sweetened composition optionally may further comprise at least one inorganic salt different than the at least one magnesium salt, wherein the at least one inorganic salt different than the at least one magnesium salt is present in the sweetened composition in an amount from about 0.8 to about 18 mmol/kg.

In a particular embodiment, the sweetened composition comprises a beverage, non-limiting examples of which include non-carbonated and carbonated beverages such as colas, ginger ales, root beers, ciders, fruit-flavored soft drinks (e.g., citrus-flavored soft drinks such as lemon-lime or orange), powdered soft drinks, and the like; fruit juices originating in fruits or vegetables, fruit juices including squeezed juices or the like, fruit juices containing fruit particles, fruit beverages, fruit juice beverages, beverages containing fruit juices, beverages with fruit flavorings, vegetable juices, juices containing vegetables, and mixed juices containing fruits and vegetables; sport drinks, energy drinks, near water and the like drinks (e.g., water with natural or synthetic flavorants); tea type or favorite type beverages such as coffee, cocoa, black tea, green tea, oolong tea and the like; beverages containing milk components such as milk beverages, coffee containing milk components, cafe au lait, milk tea, fruit milk beverages, drinkable yogurt, lactic acid bacteria beverages or the like; and dairy products.

Generally, the amount of synthetic sweetener present in a sweetened composition varies widely depending on the particular type of sweetened composition and its desired sweetness. Those of ordinary skill in the art can readily discern the appropriate amount of sweetener to put in the sweetened composition.

### EXAMPLES

### Example 1

A carbonated beverage is prepared comprising a sweetener composition comprising a combination of aspartame, acesulfame-K, sucralose, and magnesium chloride (Example 1A) or magnesium sulfate (Examples 1B and 1C) in a diluent such as carbonated water.

**Table 1: Carbonated Beverages Having a Combination of Sweeteners**

| **Ingredients** | **Example 1A** | **Example 1B** | **Example 1C** |
|---|---|---|---|
| Aspartame | 0.180 g | 0.180 g | 0.180g |
| Sucralose | 0.050 g | 0.050 g | 0.050 g |
| Acesulfame-K | 0.150g | 0.150g | 0.150 g |
| Magnesium Chloride (MgCl₂ 6H₂O) | 1.0 g | - | - |
| Magnesium Sulfate (MgSO₄ 7H₂O) | - | 1.2 g | 1.2 g |
| Sodium Chloride | - | - | 0.4 g |
| Acidulant | 1.6 g | 1.6 g | 1.6 g |
| Preservative | 0.4 g | 0.4 g | 0.4 g |
| Flavor | 2.0 g | 2.0 g | 2.0 g |
| Total (with diluent) | 1000g | 1000g | 1000g |

### Example 2

A carbonated beverage is prepared comprising a sweetener composition comprising a combination of acesulfame-K, sucralose, and magnesium chloride (Example 2A) or magnesium sulfate (Examples 2B and 2C) in a diluent such as carbonated water.

**Table 2: Carbonated Beverages Having a Combination of Sweeteners**

| **Ingredients** | **Example 2A** | **Example 2B** | **Example 2C** |
|---|---|---|---|
| Sucralose | 0.150g | 0.150g | 0.150g |
| Acesulfame-K | 0.220g | 0.220g | 0.220g |
| Magnesium Chloride (MgCl₂ 6H₂O) | 1.0g | - | - |
| Magnesium Sulfate (MgSO₄ 7H₂O) | - | 1.2g | 1.2g |
| sodium Chloride | - | - | 0.4g |
| Acidulant | 1.0g | 1.0g | 1.0g |
| Preservative | 0.4g | 0.4g | 0.4g |
| Flavor | 2.0g | 2.0g | 2.0g |
| Coloring | 0.4g | 0.4g | 0.4g |
| Total (with diluent) | 1000g | 1000g | 1000g |

### Example 3

A carbonated beverage was prepared comprising a sweetener composition comprising a combination of acesulfame-K and sucralose both with (Example 3B) and without (Example 3A) magnesium chloride in a diluent of carbonated water.

**Table 3: Carbonated Beverages Having a Combination of Sweeteners**

| **Ingredients** | **Example 3A** | **Example 3B** |
|---|---|---|
| Sucralose | 0.130 g | 0.130 g |
| Acesulfame-K | 0.200 g | 0.200 g |
| magnesium Chloride (MgCl₂, 6H₂O) | | 1.0 g |
| Acidulant | 1.0 g | 1.0 g |
| Flavor | 1.7 g | 1.7 g |
| Preservatives | 0.4 g | 0.4 g |
| Coloring | 0.4 g | 0.4 g |
| Carbonated Water | Adequate | Adequate |
| Total | 1 kg | 1 kg |

A sensory evaluation was made for each sample by tasting each sample at least 10 evaluators and by rating the after taste and body of the beverage. 6 of the 10 evaluators characterized the beverage with magnesium salt as having a good aftertaste while 0 of the 10 evaluators characterized the beverage without magnesium salt as having a good aftertaste. 5 of the 10 evaluators characterized the beverage with magnesium salt as having good body while 0 of the 10 evaluators characterized the beverage without magnesium salt as having good body.

### Example 4

A sweetener composition was prepared comprising combinations of aspartame, acesulfame-K, and sucralose. 5 evaluators made a sensory evaluation for each sample by tasting each sample and by comparing the taste and aftertaste of the sample to sugar. A summary of the results is provided in Table 4 below. Sweetener compositions having the most similar taste or aftertaste to sugar are denoted by ⊙ (as characterized by at least 3 evaluators), sweetener compositions having the least similar taste or aftertaste to sugar are denoted by ⓧ (as characterized by no more than 1 evaluator), and sweetener compositions having a moderately similar taste or aftertaste to sugar are denoted by ○ (as characterized by 2 evaluators.

**Table 4: Sensory Evaluation of Combinations of Sweeteners**

| | | | | | | | |
|---|---|---|---|---|---|---|---|
| Composition | Aspartame | 0.180g | - | 0.180g | - | 0.180g | - |
| | esulfame-K | 0.150g | 0.220g | 0.150g | 0.220g | 0.150g | 0.220g |
| | Sucralose | 0.050g | 0.150g | 0.050g | 0.150g | 0.050g | 0.150g |
| | MgCl₂6H₂O | 1.0g | 1.0g | - | - | - | - |
| | MgSO₄ 7H₂O | - | - | 1.2g | 1.2g | - | - |
| | NaCl | - | - | 0.4g | 0.4g | - | - |
| Sensor Evaluation | Similarity to Sugar - | ⊙ | ⊙ | ○ | ○ | ⓧ | ⓧ |
| | Aftertaste | ⊙ | ⊙ | ○ | ○ | ⓧ | ⓧ |

## Claims

1. A sweetener composition comprising:
acesulfame-K and sucralose wherein the acesulfame-K and sucralose are present in the sweetener composition at a weight ratio from 0.5 to 3.0 parts acesulfame-K to about 1 part sucralose and
at least one magnesium salt selected from the group consisting of magnesium chloride, magnesium sulfate, or combinations thereof.

2. The sweetener composition of claim 1, further comprising aspartame.

3. The sweetener composition of claim 1 or claim 2, wherein the magnesium chloride is present in the sweetener composition at a weight ratio from 0.07 to 15 parts magnesium chloride on a dry basis to about 1 part the total amount of the synthetic sweetener.

4. The sweetener composition of claim 3, wherein the magnesium chloride is present in the sweetener composition at a weight ratio from 0.3 to 9 parts magnesium chloride on a dry basis to about 1 part the total amount of the synthetic sweetener.

5. The sweetener composition of claim 1 or claim 2, wherein magnesium sulfate is present in the sweetener composition at a weight ratio from 0.07 to 19 parts magnesium sulfate on a dry basis to about 1 part the total amount of the synthetic sweetener.

6. The sweetener composition of claim 5, wherein the magnesium sulfate is present in the sweetener composition at a weight ratio from 0.4 to 11 parts magnesium sulfate on a dry basis to about 1 part the total amount of the synthetic sweetener.

7. The sweetener composition of claim 1 or 2, further comprising at least one inorganic salt different than the at least one magnesium salt.

8. The sweetener composition of claim 7, wherein the at least one inorganic salt comprises sodium chloride.

9. The sweetener composition of claim 8, wherein the sodium chloride is present in the sweetener composition at a weight ratio from 0.07 to 14 parts sodium chloride on a dry basis to about 1 part the total amount of the synthetic sweetener.

10. A sweetened composition comprising:
a sweetenable composition; and
the sweetener composition of any preceding claim.

11. The sweetened composition of claim 10, wherein the at least one magnesium salt is present in the sweetened composition in an amount in the range of 0.4 to 12 mmol/kg.

12. The sweetened composition of claim 10 when dependent on claim 7, wherein the at least one inorganic salt different than the at least one magnesium salt is present in the sweetened composition in an amount in the range of 0.8 to 18 mmol/kg.

13. The sweetened composition of claim 10, wherein the sweetened composition comprises a food, beverage, pharmaceutical, tobacco, nutraceutical, oral hygienic, or cosmetic.

14. A beverage comprising the sweetened composition of claim 10, 11, or 12.

15. The beverage of claim 14, wherein the beverage is a non-carbonated beverage or a carbonated beverage.

16. The beverage of claim 15, wherein the carbonated beverage is a cola or wherein the carbonated beverage is a root beer.

17. The beverage of claim 14, wherein the beverage is a citrus-flavored beverage, optionally wherein the citrus-flavored beverage is a lemon-lime flavored beverage or a orange-flavored beverage.

18. The beverage of claim 14, wherein the beverage is one of a fruit juice, fruit-flavored or fruit-containing beverage, a vegetable juice, a vegetable containing beverage, tea, coffee, a sports drink, an energy drink, or a flavored water, or wherein the beverage comprises a dairy component.

## Patentansprüche

1. Süßstoffzusammensetzung, umfassend:
Acesulfam-K und Sucralose, wobei das Acesulfam-K und die Sucralose in einem Gewichtsverhältnis von 0,5 bis 3,0 Teilen Acesulfam-K auf etwa 1 Teil Sucralose in der Süßstoffzusammensetzung vorhanden sind, und
wenigstens ein Magnesiumsalz, ausgewählt aus der Gruppe bestehend aus Magnesiumchlorid, Magnesiumsulfat und Kombinationen davon.

2. Süßstoffzusammensetzung gemäß Anspruch 1, ferner umfassend Aspartam.

3. Süßstoffzusammensetzung gemäß Anspruch 1 oder Anspruch 2, wobei das Magnesiumchlorid in einem Gewichtsverhältnis von 0,07 bis 15 Teilen Magnesiumchlorid auf Trockenbasis auf etwa 1 Teil der Gesamtmenge des synthetischen Süßstoffs in der Süßstoffzusammensetzung vorhanden ist.

4. Süßstoffzusammensetzung gemäß Anspruch 3, wobei das Magnesiumchlorid in einem Gewichtsverhältnis von 0,3 bis 9 Teilen Magnesiumchlorid auf Trockenbasis auf etwa 1 Teil der Gesamtmenge des synthetischen Süßstoffs in der Süßstoffzusammensetzung vorhanden ist.

5. Süßstoffzusammensetzung gemäß Anspruch 1 oder Anspruch 2, wobei Magnesiumsulfat in einem Gewichtsverhältnis von 0,07 bis 19 Teilen Magnesiumsulfat auf Trockenbasis auf etwa 1 Teil der Gesamtmenge des synthetischen Süßstoffs in der Süßstoffzusammensetzung vorhanden ist.

6. Süßstoffzusammensetzung gemäß Anspruch 5, wobei das Magnesiumsulfat in einem Gewichtsverhältnis von 0,4 bis 11 Teilen Magnesiumsulfat auf Trockenbasis auf etwa 1 Teil der Gesamtmenge des synthetischen Süßstoffs in der Süßstoffzusammensetzung vorhanden ist.

7. Süßstoffzusammensetzung gemäß Anspruch 1 oder 2, ferner umfassend wenigstens ein anorganisches Salz, das von dem wenigstens einen Magnesiumsalz verschieden ist.

8. Süßstoffzusammensetzung gemäß Anspruch 7, wobei das wenigstens eine anorganische Salz Natriumchlorid umfasst.

9. Süßstoffzusammensetzung gemäß Anspruch 8, wobei das Natriumchlorid in einem Gewichtsverhältnis von 0,07 bis 14 Teilen Natriumchlorid auf Trockenbasis auf etwa 1 Teil der Gesamtmenge des synthetischen Süßstoffs in der Süßstoffzusammensetzung vorhanden ist.

10. Gesüßte Zusammensetzung, umfassend:
eine süßbare Zusammensetzung; und
die Süßstoffzusammensetzung gemäß einem der vorstehenden Ansprüche.

11. Gesüßte Zusammensetzung gemäß Anspruch 10, wobei das wenigstens eine Magnesiumsalz in einer Menge im Bereich von 0,4 bis 12 mmol/kg in der gesüßten Zusammensetzung vorhanden ist.

12. Gesüßte Zusammensetzung gemäß Anspruch 10, wenn abhängig von Anspruch 7, wobei das wenigstens eine anorganische Salz, das von dem wenigstens einen Magnesiumsalz verschieden ist, in einer Menge im Bereich von 0,8 bis 18 mmol/kg in der gesüßten Zusammensetzung vorhanden ist.

13. Gesüßte Zusammensetzung gemäß Anspruch 10, wobei die gesüßte Zusammensetzung ein Nahrungsmittel, ein Getränk, ein Arzneimittel, einen Tabak, ein Nutrazeutikum, ein Mundhygieneprodukt oder ein Kosmetikum umfasst.

14. Getränk, umfassend die gesüßte Zusammensetzung gemäß Anspruch 10, 11 oder 12.

15. Getränk gemäß Anspruch 14, wobei das Getränk ein nicht kohlensäurehaltiges Getränk oder ein kohlensäurehaltiges Getränk ist.

16. Getränk gemäß Anspruch 15, wobei das kohlensäurehaltige Getränk ein Cola ist oder wobei das kohlensäurehaltige Getränk ein Root Beer ist.

17. Getränk gemäß Anspruch 14, wobei das Getränk ein Getränk mit Citrusaroma ist, gegebenenfalls wobei das Getränk mit Citrusaroma ein Getränk mit Citronen-Limetten-Aroma oder ein Getränk mit Orangenaroma ist.

18. Getränk gemäß Anspruch 14, wobei das Getränk eines von einem Fruchtsaft, einem fruchthaltigen Getränk mit Fruchtaroma, einem Gemüsesaft, einem gemüsehaltigen Getränk, Tee, Kaffee, einem Sportgetränk, einem Energiegetränk oder einen aromatisierten Wasser ist oder wobei das Getränk eine Milchprodukt-Komponente umfasst.

## Revendications

1. Composition d'édulcorant, comprenant :
de l'acésulfame K et du sucralose, où l'acésulfame K et le sucralose sont présent dans la composition d'édulcorant selon un rapport pondéral allant de 0,5 à 3,0 parties d'acésulfame K pour environ 1 partie de sucralose, et
au moins un sel de magnésium choisi dans le groupe constitué par le chlorure de magnésium, le sulfate de magnésium, ou des associations de ceux-ci.

2. Composition d'édulcorant selon la revendication 1, comprenant en outre de l'aspartame.

3. Composition d'édulcorant selon la revendication 1 ou la revendication 2, dans laquelle le chlorure de magnésium est présent dans la composition d'édulcorant selon un rapport pondéral allant de 0,07 à 15 parties de chlorure de magnésium, sur une base de matière sèche, pour environ 1 partie de la quantité totale d'édulcorant synthétique.

4. Composition d'édulcorant selon la revendication 3, dans laquelle le chlorure de magnésium est présent dans la composition d'édulcorant selon un rapport pondéral allant de 0,3 à 9 parties de chlorure de magnésium, sur une base de matière sèche, pour environ 1 partie de la quantité totale d'édulcorant synthétique.

5. Composition d'édulcorant selon la revendication 1 ou la revendication 2, dans laquelle le sulfate de magnésium est présent dans la composition d'édulcorant selon un rapport pondéral allant de 0,07 à 19 parties de sulfate de magnésium, sur une base de matière sèche, pour environ 1 partie de la quantité totale d'édulcorant synthétique.

6. Composition d'édulcorant selon la revendication 5, dans laquelle le sulfate de magnésium est présent dans la composition d'édulcorant selon un rapport pondéral allant de 0,4 à 11 parties de sulfate de magnésium, sur une base de matière sèche, pour environ 1 partie de la quantité totale d'édulcorant synthétique.

7. Composition d'édulcorant selon la revendication 1 ou 2, comprenant en outre au moins un sel inorganique différent du au moins un sel de magnésium.

8. Composition d'édulcorant selon la revendication 7, dans laquelle le au moins un sel inorganique comprend du chlorure de sodium.

9. Composition d'édulcorant selon la revendication 8, dans laquelle le chlorure de sodium est présent dans la composition d'édulcorant selon un rapport pondéral allant de 0,07 à 14 parties de chlorure de sodium, sur une base de matière sèche, pour environ 1 partie de la quantité totale d'édulcorant synthétique.

10. Composition édulcorée, comprenant :
une composition pouvant être édulcorée ; et
la composition d'édulcorant selon l'une quelconque des revendications précédentes.

11. Composition édulcorée selon la revendication 10, dans laquelle le au moins un sel de magnésium est présent dans la composition édulcorée selon une quantité dans la plage allant de 0,4 à 12 mmol/kg.

12. Composition édulcorée selon la revendication 10 lorsqu'elle dépend de la revendication 7, dans laquelle le au moins un sel inorganique différent du au moins un sel de magnésium est présent dans la composition édulcorée selon une quantité dans la plage allant de 0,8 à 18 mmol/kg.

13. Composition édulcorée selon la revendication 10, dans laquelle la composition édulcorée comprend un produit alimentaire, de boisson, pharmaceutique, de tabac, nutraceutique, d'hygiène orale ou cosmétique.

14. Boisson comprenant la composition édulcorée selon la revendication 10, 11 ou 12.

15. Boisson selon la revendication 14, **caractérisée en ce que** la boisson est une boisson non gazeuse ou une boisson gazeuse.

16. Boisson selon la revendication 15, **caractérisée en ce que** la boisson gazeuse est un cola ou **caractérisée en ce que** la boisson gazeuse est une bière de racine.

17. Boisson selon la revendication 14, **caractérisée en ce que** la boisson est une boisson aromatisée aux agrumes, éventuellement où la boisson aromatisée aux agrumes est une boisson aromatisée au citron-citron vert ou une boisson aromatisée à l'orange.

18. Boisson selon la revendication 14, **caractérisée en ce que** la boisson est choisie parmi un jus de fruit, une boisson contenant des fruits ou aromatisée aux fruits, un jus de légumes, une boisson contenant des légumes, du thé, du café, une boisson pour sportifs, une boisson énergisante, ou une eau aromatisée, ou **caractérisée en ce que** la boisson comprend un composant laitier.
